# EUROPEAN PATENT APPLICATION

(11) **EP 4 818 127 A1**
(43) Date of publication of application: **07.10.2026**
(21) Application number: 25382325.6
(22) Date of filing: 01.04.2025
(51) Int. Cl.: C02F 1/461, C02F 1/467, C02F 103/30

(54) **SYSTEM AND METHOD FOR WATER TREATMENT**

(71) Applicant: Universitat Politècnica De Catalunya, 08034 Barcelona (ES)
(72) Inventor: LÓPEZ GRIMAU, Victor, 08034 Barcelona (ES); CANALS CASALS, Lluc, 08034 Barcelona (ES); MANACÁS DE BENITO, Jorge, 08034 Barcelona (ES); CUESTA I MOTA, Dídac, 08034 Barcelona (ES); SERRA CLUSELLAS, Anna, 08034 Barcelona (ES)
(74) Representative: Herrero & Asociados, S.L.

(57) **Abstract**

The present invention relates to an electrochemical system and method for water treatment and regeneration, with the simultaneous recovery of valuable by-products, particularly hydrogen. The system is designed to efficiently remove organic matter from wastewater streams while enabling the production and recovery of hydrogen and optionally other useful compounds.

## Description

### FIELD OF THE INVENTION

The present invention relates to an electrochemical system and to a method for water treatment with the simultaneous recovery of valuable by-products, particularly hydrogen. The system is designed to efficiently remove organic matter from wastewater streams while enabling the production and recovery of hydrogen and optionally other useful compounds.

### BACKGROUND OF THE INVENTION

Water treatment is a critical process in ensuring the availability of clean and safe water for industrial, agricultural, and domestic applications. Conventional water purification methods, such as chemical coagulation, filtration, and biological treatment, often suffer from inefficiencies, high energy consumption, or the need for significant chemical inputs, which may lead to secondary pollution.

In recent years, electrochemical water treatment systems have gained significant attention due to their ability to remove contaminants efficiently while minimizing the use of chemical additives. Such systems typically employ electrocoagulation, electrooxidation, or electroreduction processes, utilizing electrodes to induce reactions that break down or separate pollutants from water. Electrochemical methods have demonstrated effectiveness in treating heavy metals, organic pollutants, pathogens, and other harmful substances.

The patent document EP3940117B1 titled "Alkaline water electrolysis method and alkaline water electrolysis anode", defines an electrolysis technique such that the electrolysis performance is unlikely to be deteriorated, and excellent catalytic activity is retained stably over a long period of time even when electric power having a large output fluctuation, such as renewable energy, is used a power source, and this object is realized by an alkaline water electrolysis method, in which an electrolytic solution obtained by dispersing a catalyst containing a hybrid cobalt hydroxide nanosheet (Co-NS) being a composite of a metal hydroxide and an organic substance is supplied to an anode chamber and a cathode chamber that form an electrolytic cell, and the electrolytic solution is used for electrolysis in each chamber in common, and an alkaline water electrolysis anode.

The paper, "Hydrogen production from electrochemical treatment of textile dyeing wastewaters", Cuesta-Mota et al., 2024, explored the electrochemical decolorization of textile effluents containing reactive azo dyes, demonstrating that these processes not only achieve high levels of color removal (>90%) but also allow hydrogen recovery. The study utilized a Hofmann voltameter system with platinum electrodes and different electrolyte compositions (NaCl or NaOH) to assess the impact of salinity and current density on hydrogen production. Despite these promising results, the system was limited by its energy efficiency, as it required significantly higher energy consumption compared to conventional alkaline water electrolysis. Additionally, the study did not integrate anionic exchange membranes to prevent anodic and cathodic cross-contamination, which could enhance the purity of the recovered hydrogen.

Despite these advantages, current electrochemical water treatment technologies face several challenges: leading to reduced efficiency and increased maintenance costs; high energy consumption: certain electrochemical methods require significant power input, making them less viable for large-scale or decentralized applications; limited scalability: many existing designs are optimized for small-scale treatment but struggle with consistent performance in industrial-scale applications.

There remains a need for an improved electrochemical water treatment system that enhances efficiency, reduces operational costs, and maintains consistent performance across varying water conditions.

### SUMMARY OF THE INVENTION

The present invention seeks to address these challenges by providing a novel system and method for electrochemical water treatment that offers enhanced contaminant removal, by-product recovery and lower energy requirements.

The present invention relates to a method for the treatment and regeneration of wastewater, coupled with the production of hydrogen gas, utilizing a bicompartmental electrochemical cell. More specifically, the invention provides a process in which a non-biodegradable wastewater effluent is introduced into the anode compartment of the electrochemical cell, where oxidation of organic substances takes place. Simultaneously, a catholyte comprising either the same effluent or an alkaline solution such as NaOH or KOH is circulated through the cathode compartment, facilitating water reduction and subsequent hydrogen gas generation. The anolyte and catholyte are maintained in separate compartments, effectively preventing cross-mixing through the use of an anionic exchange membrane. This separation not only ensures process stability but also results in the production of hydrogen gas with high purity, as it is isolated from other reactive or contaminating species. Furthermore, by maintaining hydrogen in a separate compartment, the system significantly reduces the risk of explosive mixtures forming with oxygen or volatile organics. To ensure continuous operation, both electrolytes are recirculated between the electrochemical cell and their respective containers by means of a dual-channel peristaltic pump. The hydrogen gas generated at the cathode is collected in a closed, thermostatic catholyte container and recovered through a dedicated hydrogen recovery system. This innovative method offers an efficient and sustainable approach to wastewater treatment while simultaneously generating and recovering hydrogen as a valuable byproduct.

The invention shows some advantages, for example: unlike traditional electrolysis, the invention uses wastewater instead of pure water, reducing freshwater demand, produces hydrogen as a clean energy, the invention can treat various industrial effluents, including textile, pharmaceutical, cosmetic, and chemical wastewater and finally reduces wastewater disposal costs while recovering valuable by-products. The use of a bicompartmental design with a selective membrane ensures that hydrogen is collected in a highly pure form and separated from contaminants, enhancing its potential for safe storage and later utilization.

The first aspect of the invention is a method for water treatment, and hydrogen production and recovery, comprising:
a) recirculating an anolyte, which is a non-biodegradable wastewater effluent, from an anode compartment of a bicompartmental electrochemical cell through an anolyte container;
b) recirculating a catholyte, selected from the same effluent as the anolyte or from an alkaline solution, from a cathode compartment of the electrochemical cell through a catholyte container;
c) regulating the temperature of the anolyte and catholyte in their respective water-jacketed containers (3, 4) by recirculating water from and to a thermostatic bath (6);
d) pumping the anolyte and catholyte continuously between their respective containers and the respective bicompartmental electrochemical cell;
e) carrying out an oxidation reaction of organics substances present in the anolyte, in the anode compartment, under an applied current density in the range100 mA/cm² and 300 mA/cm²and carrying out a reduction reaction from water to hydrogen in the cathode compartment, the anode and cathode compartments being separated by an anion exchange membrane;
f) recovering the hydrogen gas produced in the cathode compartment and recirculated to the catholyte container, from an upper section of a closed catholyte container via a hydrogen recovery system.

The term non-biodegradable wastewater effluent is an effluent from industry or agriculture, that contains chemical organic pollution, which are not efficiently degraded in biological processes and can have also certain toxicity for microorganisms and can therefore not be treated by biological wastewater treatment units. Preferably the conductivity of the effluent is more than 4mS/cm. Preferably DBO₅/DQO<0.59.

The other aspect of the invention refers to an electrochemical system for water treatment and hydrogen production and recovery that comprises a bicompartmental electrochemical cell separated by an anionic exchange membrane to prevent mixing the catholyte and anolyte, a current power supply, a thermostated anolyte and catholyte container, the thermostat-controlled environment ensures a constant operational temperature; a dual-channel peristaltic pump responsible for the continuous recirculation of the catholyte and anolyte between their respective containers and a hydrogen recovery system.

Therefore, the second aspect of the invention is the electrochemical system for water treatment, which simultaneous hydrogen production and recovery, comprises the following components:
a) a bicompartmental electrochemical cell that includes an anode in contact with an anolyte and a cathode in contact with a catholyte, housed in separate compartments, anode compartment and cathode compartment, which are separated by an anionic exchange membrane;
b) the anode and the cathode connected to a continuous current power supply to drive the electrochemical reactions;
c) an open-thermostated anolyte container, where the anolyte is continuously homogenized and recirculated to and from the anode compartment of the electrochemical cell;
d) a closed-thermostated catholyte container, where the catholyte is continuously homogenized and recirculated to and from the cathode compartment of the electrochemical cell, and where hydrogen is recovered at the upper section of the container due to a pressure gradient;
e) a dual-channel peristaltic pump responsible for the continuous recirculation of both the catholyte and anolyte between their respective containers and the electrochemical cell;
f) a thermostatic bath, connected to both the anolyte and catholyte containers; and
g) a hydrogen recovery system.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:

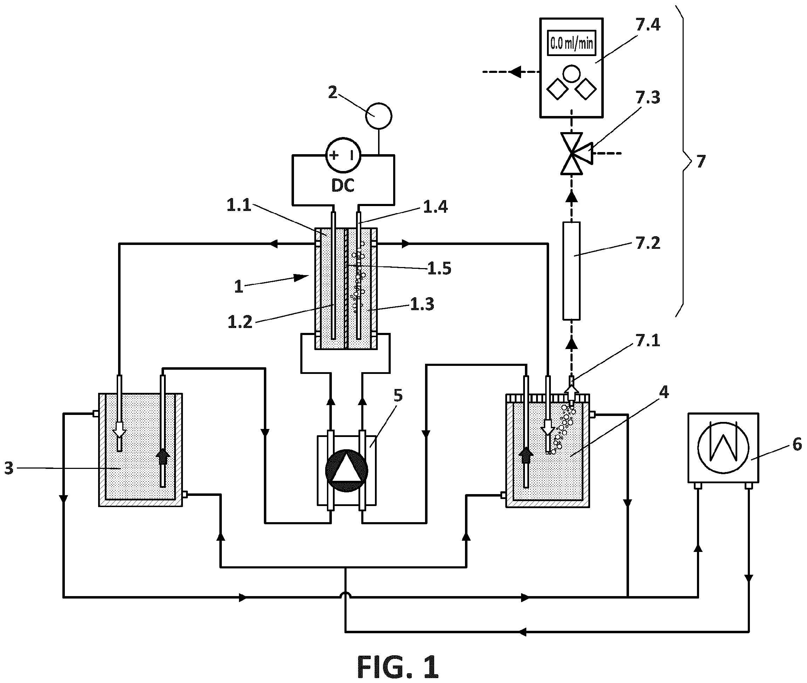

Figure 1 shows a scheme of the system of the invention.
Figure 2 shows TOC evolution (**■, ▲**) and electric consumption (□, △) as a function of electric charge using BDD electrodes when applying 150 mA/cm² for the treatment of a mercerization effluent (used as anolyte) and the following catholytes: (■,□) mercerization effluent (▲,△) 20% w/w NaOH solution.
Figure 3 shows H₂ flowrate over time produced during the regeneration of textile mercerization effluent when this effluent is also used as a catholyte, applying 150 mA/cm².

### DETAILED DESCRIPTION OF THE INVENTION

As said above the first aspect of the invention refers to a method for water treatment, and hydrogen production and recovery, comprising:
a) recirculating an anolyte, which is a non-biodegradable wastewater effluent, from an anode compartment (1.1) of a bicompartmental electrochemical cell (1) through an anolyte container (3);
b) recirculating a catholyte, selected from the same effluent as the anolyte or from an alkaline solution, from a cathode compartment (1.3) of the electrochemical cell through a catholyte container (4);
c) regulating the temperature of the anolyte and catholyte in their respective water-jacketed containers (3, 4) by recirculating water from and to a thermostatic bath (6);
d) pumping the anolyte and catholyte continuously between their respective containers (3,4) and the respective bicompartmental electrochemical cell (1.1, 1.3);
e) carrying out an oxidation reaction of organics substances present in the anolyte, in the anode compartment (3), under an applied current density in the range100 mA/cm² and 300 mA/cm² and carrying out a reduction reaction from water to hydrogen in the cathode compartment (4), the anode (1.1) and cathode (1.3) compartments being separated by an anion exchange membrane (1.5);
f) recovering the hydrogen gas produced in the cathode compartment (1.3) and recirculated to the catholyte container (4), from an upper section of a closed catholyte container via a hydrogen recovery system (7).

Preferably the non-biodegradable wastewater effluent is selected from: textile effluents, cosmetic and pharmaceutical solutions, or chemical effluents, among others. In particular, the textile effluents are selected from: effluents from mercerization, dyeing, and printing processes; the regeneration of mercerization effluents and their potential reuse implies the removal of organic matter up to the decalcified water standard (TOC = 10 - 15 mg C/L) and the NaOH recovery through the direct reuse of this regenerated water for mercerization (thereby avoiding expenses associated with this commodity).

Preferably the effluent contains chloride and in the anode compartment hypochlorite is obtained (Cl⁻ + 2OH⁻ → ClO⁻ + H₂O + 1e⁻). More preferably the effluent is saline swimming effluent with chloride acting as a disinfectant. This feature enables the system's application in saline swimming pools, where hypochlorite is generated from chloride acting as a disinfectant.

Preferably the catholyte is a NaOH or KOH dissolution from 10% (w/w) to 40%(w/w). These alkaline dissolutions into the cathode compartment (1.3) facilitate hydrogen production while maintaining high electrical conductivity. Also, the use of these dissolutions as a catholyte significantly reduces electrical resistance, lowering energy consumption.

Preferably, the method further comprises a step g), defined as, g) reusing the treated anolyte as regenerated water with reduced organic content for industrial reuse.

Preferably the method further comprises a step h) wherein the hydrogen collected in step f) is blended with natural gas. This offers a sustainable energy integration.

Preferably the method further comprises a step i) wherein the cathode compartment (1.3) is refilled with distilled water.

The second aspect of the invention is the electrochemical system for water treatment, with simultaneous hydrogen production and recovery, comprises the following components:
a) a bicompartmental electrochemical cell (1) that includes an anode (1.2) in contact with an anolyte and a cathode (1.4) in contact with a catholyte, housed in separate compartments, anode compartment (1.1) and cathode compartment (1.3), which are separated by an anionic exchange membrane (1.5);
b) the anode (1.2) and the cathode (1.4) connected to a continuous current power supply (2) to drive the electrochemical reactions;
c) an open-thermostated anolyte container (3), where the anolyte is continuously homogenized and recirculated to and from the anode compartment (1.1) of the electrochemical cell (1);d) a closed-thermostated catholyte container (4), where the catholyte is continuously homogenized and recirculated to and from the cathode compartment (1.3) of the electrochemical cell (1), and where hydrogen is recovered at the upper section of the container due to a pressure gradient;
e) a dual-channel peristaltic pump (5) responsible for the continuous recirculation of both the catholyte and anolyte between their respective containers (3,4) and the electrochemical cell (1);
f) a thermostatic bath (6), connected to both the anolyte (3) and catholyte (4) containers; and
g) a hydrogen recovery system (7).

Preferably the anode compartment (1.1) and cathode compartment (1.3) have inlets at the bottom and outlets at the top wherein the catholyte and the anolyte is introduced and extracted perpendicularly to the electrodes.

In preferred embodiments, the cathode (1.3) and anode (1.1) compartments each comprise a rectangular electrode having a surface area ranging from 8 cm² to 12 cm². Preferably the distance between the electrodes (1.2, 1.4) are in a range from 5 mm to 10 mm. Preferably the electrode materials may be identical or different, depending on the specific application. Preferably anolyte volume in the range of 400 mL to 600 mL and a catholyte volume ranging from 600 mL to 700 mL.

Preferably when the effluent comprises chloride (Cl⁻), the anode (1.2) is Pt/Ti or IrOₓ-RuOₓ/Ti electrodes, by means the oxidation is primarily driven by hypochlorite (ClO⁻) generated from chloride.

Preferably when the effluent has a low chloride content, boron doped diamond (BDD) electrodes are used as anode (1.2) to produce hydroxyl radical (^{•}OH) through the partial oxidation of water.

Preferably Ni is used as cathode material to promote water reduction to hydrogen.

Preferably the hydrogen recovery system (7) comprises a hydrogen outlet (7.1) from the catholyte container (4) connected to a dehumidifier system (7.2) and a T-connector (7.3) downstream of the dehumidifier to collect the hydrogen and to measure hydrogen production through a flowmeter (7.4). Preferably the hydrogen recovery system (7) comprises a gas chromatograph to ensure quality assessment.

Preferably is an aspect of the invention the use of the system in saline swimming-pool.

### Examples of the invention

### Example 1. Treatment of textile mercerization effluents

The mercerization process involves the use of NaOH solutions applied to cotton fabrics to improve properties such as dye affinity, brightness, fibre strength, or shrinkage resistance. It shows a specific water consumption ranging from 1m³/t to 61 m³/t and a specific energy consumption from 243 kWh/t to 7406 kWh/t. After the treatment, effluents contain suspended and dissolved organic matter from the textiles, and they are usually discarded for their reuse.

The composition of the mercerisation effluent used for the electrochemical experiments is detailed in

### Table 1.

**Table 1. Physicochemical characterisation of the textile mercerization effluent used in the electrochemical experiments.**

| pH | CE (mS/cm) | TOC (mg C/L) | TIC (mg C/L) | [Na⁺] (mg/L) | [NH₄⁺] (mg/L) | [K⁺] (mg/L) | [Mg²⁺] (mg/L) | [Ca²⁺] (mg/L) |
|---|---|---|---|---|---|---|---|---|
| 13.1 ± 0.1 | 25.1 ± 0.3 | 120 ± 7 | 154±12 | 3443± 1 | 4.85± 0.02 | 98 ± 4 | < LoQ (Limit of quantification) | 1.6± 0.2 |

| | | | | | | | | |
|---|---|---|---|---|---|---|---|---|
| *CE (Electrical conductivity), TOC (Total organic carbon), TIC (Total inorganic carbon) | | | | | | | | |

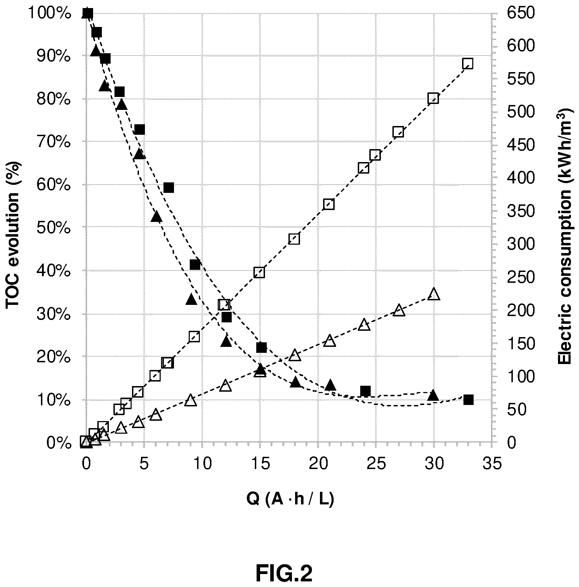

The results obtained for the textile mercerization effluent regeneration by the electrochemical system described above are included in Figure 2 and Table. In this case, the trials were conducted at 25°C and with BDD (Boron Doped Diamond) electrodes. The anionic exchange membrane was Fumasep^{®} FAS-30 AEM (Fumatech, Bietigheim-Bissingen, Germany).

Table 2 includes the applied electrical charge, the electric consumption, and the TOC removal for regenerating the mercerization effluent by using two types of catholytes: the same mercerization effluent and a 20% w/w NaOH solution.

**Table 2. Applied charge, electric consumption and TOC removal for the treatment of the textile mercerization effluent treated by the electrochemical system of the invention.**

| Catholyte type | Applied charge, Q (A h /L) | Electric consumption (kWh/m³) | TOC removal (%) |
|---|---|---|---|
| Mercerization effluent | 33.0 | 572.6 | 90% |
| 20% w/w NaOH solution | 31.7 | 237.9 | 89% |

An approximate mineralization rate of around 90% is achieved by the electrochemical system of the invention, applying 32 - 33 Ah/L, resulting in comparable TOC values (15 - 18 mg C/L) to that of decalcified water (10-15 mg C/L). A significant reduction in electric consumption is observed due to the use of a 20% w/w NaOH solution, owing to its higher electrical conductivity (theoretical range of 370 - 402 mS/cm) compared to that of the mercerization effluent (24.5 mS/cm). Consequently, the lower electrical resistance leads to decrease the electricity consumption, totalling 238 kWh/m³ in this particular bench-scale scenario.

Once the organic matter is removed, the NaOH present in the regenerated water can be reused in the mercerization process. The cost savings associated with the recovered and reused NaOH are calculated based on the Na⁺ concentration in the regenerated water, under the assumption that all Na⁺ corresponds to NaOH. 5.0 and 6.6 g/L NaOH are recovered from the regenerated effluent using mercerization solution or the 20% w/w NaOH solution as catholyte, respectively. Thereby, an approximate concentration of 0.6% NaOH is recovered from the regenerated effluent. Considering a NaOH cost of 0.5 €/kg (given by a textile company), it is estimated that the average savings obtained from the recovered NaOH would be approximately 3.0 €/m³ regenerated effluent. This benefit should be subtracted from the electrical cost of the operational process.

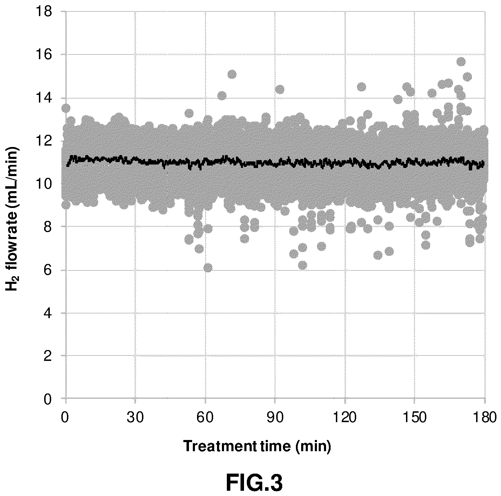

Simultaneously, hydrogen is produced and recovered at the cathode side. The H₂ flow over the treatment time is depicted in Figure 3 when using mercerization effluent as both anolyte and catholyte. Similar H₂ production results are obtained when employing a 20% w/w NaOH solution as the catholyte.

The H₂ production data is as follows:
- Average H₂ flow = 11.4 mL H₂/min = 0.7 L H₂/h.
- Faradaic yield (generation of H₂ concerning the maximum theoretical amount) = 96 -97%.
- Relative H₂ production: 33.1 L H₂/kWh/m³ = 4.1 m³ H₂/m³ regenerated effluent.
- Energy consumption for H₂ production: 370 kWh/kg H₂

Considering that hydrogen can be used as a fuel blended with natural gas, and that the average volume of H₂ is roughly 3 times lower than that of methane, the potential savings associated with natural gas consumption are as follows:
- Estimated natural gas consumption saved ~ 1.4 m³ natural gas/m³ regenerated effluent.
- Projected cost saving on natural gas (considering a conversion factor of 11.7 kWh/m³ and a natural gas cost of 0.045 €/kWh) = 0.72 €/m³ regenerated effluent.

Therefore, the benefits of hydrogen production (~0.72 €/m³) and NaOH recovery (~3 €/m³) can be deducted from the electricity expenses of the electrochemical system. This results in a potential saving of approximately 3.7 €/m³ through implementing the system of the invention and reusing water.

## Claims

1. A method for water treatment, and hydrogen production and recovery, comprising:
a) recirculating an anolyte, which is a non-biodegradable wastewater effluent, from an anode compartment (1.1) of a bicompartmental electrochemical cell (1) through an anolyte container (3);
b) recirculating a catholyte, selected from the same effluent as the anolyte or from an alkaline solution, from a cathode compartment (1.3) of the electrochemical cell through a catholyte container (4);
c) regulating the temperature of the anolyte and catholyte in their respective water-jacketed containers (3, 4) by recirculating water at a specific temperature from and to a thermostatic bath (6)
d) pumping the anolyte and catholyte continuously between their respective containers (3,4) and the respective bicompartmental electrochemical cell (1.1, 1.3);
e) carrying out an oxidation reaction of organics substances present in the anolyte, in the anode compartment (3), under an applied current density in the range100 mA/cm² and 300 mA/cm² and carrying out a reduction reaction from water to hydrogen in the cathode compartment (4), the anode (1.1) and cathode (1.3) compartments being separated by an anion exchange membrane (1.5);
f) recovering the hydrogen gas produced in the cathode compartment (1.3) and recirculated to the catholyte container (4), from an upper section of a closed catholyte container via a hydrogen recovery system (7).

2. The method according to claim 1 **characterized by** the anolyte is a non-biodegradable wastewater effluent selected from: textile effluents, cosmetic and pharmaceutical solutions, chemical effluents, or saline swimming effluent with chloride acting as a disinfectant.

3. The method according to any of the claims 1 or 2 **characterized by** the catholyte is a NaOH or KOH dissolution from 10% (w/w) to 40%(w/w).

4. The method according any of the claims 1 to 3 **characterized by** further comprises a step g) of reusing the treated anolyte as regenerated water with reduced organic content for industrial reuse.

5. A electrochemical system for water treatment, with simultaneous hydrogen production and recovery, comprising:
a) a bicompartmental electrochemical cell (1) that includes an anode (1.2) in contact with an anolyte and a cathode (1.4) in contact with a catholyte, housed in separate compartments, anode compartment (1.1) and cathode compartment (1.3), which are separated by an anionic exchange membrane (1.5);
b) the anode (1.2) and the cathode (1.4) connected to a continuous current power supply (2) to drive the electrochemical reactions;
c) an open-thermostated anolyte container (3), where the anolyte is continuously homogenized and recirculated to and from the anode compartment (1.1) of the electrochemical cell (1);
d) a closed-thermostated catholyte container (4), where the catholyte is continuously homogenized and recirculated to and from the cathode compartment (1.3) of the electrochemical cell (1), and where hydrogen is recovered at the upper section of the container due to a pressure gradient;
e) a dual-channel peristaltic pump (5) responsible for the continuous recirculation of both the catholyte and anolyte between their respective containers (3,4) and the electrochemical cell (1);
f) a thermostatic bath (6), connected to both the anolyte (3) and catholyte (4) containers; and
g) a hydrogen recovery system (7).

6. The system according claim 5 **characterized by** the hydrogen recovery system (7) comprises a hydrogen outlet (7.1) from the catholyte container (4) connected to a dehumidifier system (7.2) and a T-connector (7.3) downstream of the dehumidifier to collect the hydrogen and to measure hydrogen production through a flowmeter (7.4).
